(19) Europäisches Patentamt

European Patent Office

Office européen des brevets

(11) **EP 1 637 502 A1**

(12) **EUROPÄISCHE PATENTANMELDUNG**

(43) Veröffentlichungstag:
22.03.2006 Patentblatt 2006/12

(51) Int Cl.:
*C01G 23/00* (2006.01)     *C04B 35/465* (2006.01)
*C04B 35/468* (2006.01)     *H01G 4/12* (2006.01)

(21) Anmeldenummer: 04021822.4

(22) Anmeldetag: 14.09.2004

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL HR LT LV MK**

(71) Anmelder: **Kerr-McGee Pigments GmbH
47829 Krefeld (DE)**

(72) Erfinder:
• **Auer, Gerhard
47800 Krefeld (DE)**
• **Schuy, Werner
47918 Tönisvort (DE)**

• **Röttger, Anna
47798 Krefeld (DE)**
• **Völtzke, Dieter
06114 Halle (DE)**
• **Schwarz, Harald
04319 Leipzig (DE)**
• **Abicht, Hans-Peter
06120 Halle (DE)**

(74) Vertreter: **HOFFMANN EITLE
Patent- und Rechtsanwälte
Arabellastrasse 4
81925 München (DE)**

(54) **Feinteilige Erdalkalititanate und Verfahren zu deren Herstellung unter Verwendung von Titanoxidhydratpartikeln**

(57)     Die Erfindung betrifft feinteilige Erdalkalititanate sowie ein Verfahren zu ihrer Herstellung durch Umsetzung von Erdalkalimetallverbindungen mit Titandioxidpartikeln. Die Titandioxidpartikel weisen eine BET-Oberfläche von mehr als 50 m$^2$/g auf. Das Erdalkalititanat kann eine BET-Oberfläche von 5 bis 100 m$^2$/g, einen Chloridgehalt von weniger als 100 ppm, bevorzugt weniger als 10 ppm, und einen Niob-Gehalt von 10 bis 300 ppm, bevorzugt von 15 bis 100 ppm aufweisen. Das Erdalkalititanat kann zur Herstellung mikroelektronischer Bauteile verwendet werden.

EP 1 637 502 A1

**Beschreibung**

Die Erfindung betrifft feinteilige Erdalkalititanate, ein Verfahren zu ihrer Herstellung durch Umsetzung von Erdalkalimetallverbindungen mit Titandioxidpartikeln. Weiterhin betrifft die Erfindung ein mikroelektronisches Bauelement, welches ein Erdalkalititanat enthält.

**Stand der Technik:**

Erdalkalititanate, insbesondere BaTiO$_3$, eignen sich wegen ihrer hervorragenden dielektrischen Eigenschaften zur Herstellung von mikroelektronischen Bauelementen wie z.B. keramischen Vielschichtkondensatoren (MLCC).

Erdalkalititanate können durch Synthesemethoden, die über Festkörperreaktionen ablaufen, und durch nasschemische Methoden hergestellt werden.

Hennings (J. Am. Ceram. Soc. 84 (2001) 2777-2782) beschreibt eine Festkörperreaktion zur Herstellung von BaTiO$_3$ aus TiO$_2$ mit einer Partikelgröße von 200 nm durch Kalzinieren mit BaCO$_3$ bei 900 bis 1200 °C. Das auf diese Weise hergestellte BaTiO$_3$ ist allerdings sehr stark agglomeriert mit Kristallitgrößen von 200 nm bis 1 $\mu$m und muss durch Mahlen desintegriert werden.

Aus Untersuchungen zum Bildungsmechanismus über Festkörperreaktionen (A. Beauger, J.C. Mutin, J.C. Niepce, J. Mater. Sci. 18 (1983), 3543-3550; J.C. Niepce, G. Thomas, Solid State Ionics 43 (1990) 69-76; D.F. Hennings, B.S. Schreinemacher, H. Schreinemacher, J. Am. Ceram. Soc. 84 (2001) 2777-2782) ist bekannt, dass die Bildungsreaktion hauptsächlich durch Diffusion von Ba$^{2+}$- und O$^{2-}$-Ionen in die TiO$_2$-Partikel erfolgt, das heißt die Morphologie der TiO$_2$-Partikel bestimmt hauptsächlich die Morphologie der BaTiO$_3$-Partikel. Andererseits müssen die Barium- und Oxid-Ionen bei solchen Temperaturen vorhanden sein, die einerseits die Diffusion ermöglichen, aber andererseits Kristallwachstumsprozesse der TiO$_2$- bzw. BaTiO$_3$- Partikeln nur in sehr geringem Umfang gestatten.

DE 3635532 (D. Hennings, H. Schreinemacher) offenbart ein nasschemisches Verfahren zur Herstellung von BaTiO$_3$ durch Kopräzipitation von Barium- und Titanverbindungen und anschließendes Kalzinieren. Dieses Verfahren ist sehr aufwändig und teuer, ebenso wie die hydrothermale Herstellung von BaTiO$_3$ aus Ba(OH)$_2$ oder löslichen Ba-Verbindungen und TiO$_2$ unter Verwendung von Mineralisatoren, z.B. KOH, NaOH (J. H. Lee, H.H. Nersiyan, C. W. Won, J. Mater. Sci. 39 (2004) 1397-1401, J. Moon, J. A. Kerchner, H. Karup, J. H. Adair, J. Mater. Res. 14 (1999) 425-435).

**Zusammenfassung der Erfindung:**

Vor dem Hintergrund dieses Standes der Technik liegt der vorliegenden Erfindung die Aufgabe zu Grunde, feinteilige, hochreine und wirtschaftlich herstellbare Erdalkalititanate sowie ein Verfahren zu ihrer Herstellung unter Verwendung einfacher titanhaltiger Substrate bereitzustellen.

Die Aufgabe wird erfindungsgemäß zum einen gelöst durch ein Verfahren zur Herstellung von Erdalkalititanaten durch Umsetzung von Erdalkalimetallverbindungen mit Titandioxidpartikeln mit einer BET-Oberfläche von mehr als 50 m$^2$/g.

Die Aufgabe wird ferner gelöst durch die Bereitstellung eines Erdalkalititanats, welches durch das erfindungsgemäße Verfahren herstellbar ist. Das Erdalkalititanat kann eine BET-Oberfläche von 5 bis 100 m$^2$/g, einen Chloridgehalt von weniger als 100 ppm und einen Niob-Gehalt von 10 bis 300 ppm aufweisen.

Die Erfindung umfasst zudem die Bereitstellung eines mikroelektronischen Bauelementes umfassend ein erfindungsgemäßes Erdalkalititanat.

**Abbildungen:**

Abb.1: Röntgendiffraktogramm von Titanoxidhydrat (BET: 271 m$^2$/g)

Abb.2: Röntgendiffraktogramm von Bariumtitanat aus Titanoxidhydrat (BET: 271 m$^2$/g) und Ba(OH)$_2$ (kalziniert bei 400°C)

Abb.3: Thermische Analyse (DSC - differential scanning calorimetry, TG - Thermogravimetrie, DTG - Differenz-TG) des Ausgangsstoffes Ba(NO$_3$)$_2$ (oben) und des Gemenges mit Titanoxidhydrat (unten)

Abb.4: Röntgendiffraktogramm des Produkts aus gröberem Titanoxid (BET: 6 m$^2$/g) und Ba(OH)$_2$ (kalziniert bei 400°C)

Abb.5: Spezifischer Widerstand von BaTiO$_3$-Keramiken, gesintert bei 1400 °C, mit unterschiedlichem Kompensationsgrad des Nb mit A1

**Genaue Beschreibung der Erfindung:**

Die Titandioxidpartikel

Die erfindungsgemäß verwendeten Titandioxidpartikel weisen eine BET-Oberfläche von mehr als 50 $m^2/g$, vorzugsweise weniger als 450 $m^2/g$, besonders bevorzugt 200 bis 380 $m^2/g$, insbesondere bevorzugt 250 bis 350 $m^2/g$, auf. Die Bestimmung der BET-Oberfläche erfolgt dabei nach DIN ISO 9277 mittels $N_2$ bei 77 K an einer bei 140 °C während 1 Stunde entgasten und getrockneten Probe aus den Titandioxidpartikeln. Die Auswertung erfolgt über Mehrpunktbestimmung (10-Punkt-Bestimmung).

Die erfindungsgemäß verwendeten Titandioxidpartikel sind regelmäßig Titanoxidhydratpartikel, d.h. die Partikel enthalten chemisorbiertes Wasser und gegebenenfalls $H_2SO_4$ und/oder weitere anorganische und/oder organische Bestandteile.

Vorzugsweise enthalten die Titandioxidpartikel 0,4 bis 25 Gew.-%, besonders bevorzugt 2 bis 10 Gew.-%, Wasser.

Der $H_2SO_4$-Gehalt der Titandioxidpartikel beträgt vorzugsweise weniger als 1 Gew.-%, besonders bevorzugt zwischen 0,01 bis 0,4 Gew.-%, insbesondere bevorzugt zwischen 0,01 bis 0,08 Gew.-%, bezogen auf $TiO_2$.

Die angegebenen und alle nachfolgend aufgeführten Gewichtsprozentangaben der Inhaltsstoffe des Titandioxids beziehen sich auf eine nach ISO 787 Teil 2 getrocknete Probe.

Die Bestimmung des $H_2O$-Gehalts der Titandioxidpartikel kann nach folgender Gleichung erfolgen:

$$\text{H}_2\text{O-Gehalt (\%)} = \text{Glühverlust (\%)} - \text{H}_2\text{SO}_4\text{-Gehalt (\%)}$$

Hierbei ist der Glühverlust der Gewichtsverlust einer nach ISO 787 Teil 2 getrockneten Probe nach einstündigem Glühen bei einer Temperatur von 1000°C. Der $H_2SO_4$-Gehalt wird auf Grundlage der analytischen Bestimmung des Schwefelgehalts der nach ISO 787 Teil 2 getrockneten Probe ermittelt.

Die Bestimmung des Schwefelgehalts erfolgt durch Verbrennung und gaschromatographische Detektion der Verbrennungsgase mittels Wärmeleitfähigkeitsdetektion (WLD).

Näherungsweise kann der $H_2O$-Gehalt der Titandioxidpartikel auch mit dem Glühverlust nach einstündigem Glühen der nach ISO 787 Teil 2 getrockneten Probe bei 500°C gleichgesetzt werden.

Eine exakte Bestimmung des $H_2O$-Gehalts der Titandioxidpartikel kann beispielsweise durch gaschromatographische Analyse der flüchtigen Bestandteile erfolgen, welche nach einstündigem Glühen bei einer Temperatur von 1000°C einer nach ISO 787 Teil 2 getrockneten Probe entstehen.

Vorzugsweise beträgt der Kohlenstoffgehalt der Titandioxidpartikel weniger als 1000 ppm, besonders bevorzugt weniger als 500 ppm, insbesondere bevorzugt weniger als 50 ppm, bezogen auf $TiO_2$. Die Bestimmung des Kohlenstoffgehalts erfolgt durch Verbrennung und gaschromatographische Detektion der Verbrennungsgase mittels Wärmeleitfähigkeitsdetektion (WLD).

Der Halogenidgehalt der erfindungsgemäß verwendeten Titandioxidpartikel beträgt vorzugsweise weniger als 1000 ppm, besonders bevorzugt weniger als 500 ppm, insbesondere bevorzugt weniger als 50 ppm, bezogen auf $TiO_2$. Insbesondere beträgt der Chloridgehalt der Partikel vorzugsweise weniger als 200 ppm, insbesondere weniger als 100 ppm, besonders bevorzugt weniger als 20 ppm, bezogen auf $TiO_2$.

Der Gehalt an Niob der Titandioxidpartikel kann 10 bis 2000 ppm, vorzugsweise 30 bis 500 ppm, insbesondere 50 bis 300 ppm, bezogen auf $TiO_2$, betragen.

Der Gehalt an Natrium und/oder Kalium der erfindungsgemäß verwendeten Titandioxidpartikel beträgt vorzugsweise weniger als 200 ppm, bezogen auf $TiO_2$.

Der Gehalt an Eisen der erfindungsgemäß verwendeten Titandioxidpartikel beträgt vorzugsweise weniger als 100 ppm, besonders bevorzugt weniger als 10 ppm, bezogen auf $TiO_2$.

Die erfindungsgemäß verwendeten Titanoxidhydratpartikel können durch Hydrolyse anorganischer oder organischer Titanverbindungen erhalten werden. Je nach Titanverbindung und Reaktionsbedingungen ergeben sich dabei unterschiedliche Eigenschaften der erhaltenen Titandioxide.

Durch Hydrolyse von Titanylsulfatlösung lassen sich die erfindungsgemäß verwendeten Titanoxidhydratpartikel in guter Qualität und kostengünstig herstellen. Die Titanoxidhydratpartikel können jedoch auch aus Titantetrachlorid oder Titanalkoxid hergestellt werden.

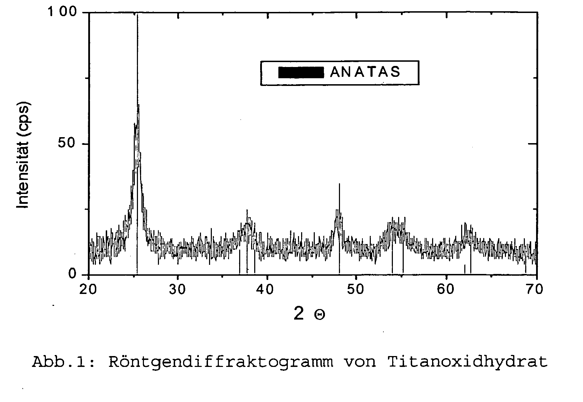

Bei Titanoxidhydrat, welches durch Hydrolyse von Titanylsulfatlösung erhalten wird, liegt eine besonders vorteilhafte Kombination von Eigenschaften vor, nämlich eine hohe spezifische Oberfläche und eine mikrokristalline Anatasstruktur. Diese Anatasstruktur kann aufgrund der breiten Reflexe des Röntgendiffraktogramms (s. Abb. 1) als mikrokristallines Material identifiziert werden.

Vorzugsweise enthalten die erfindungsgemäß verwendeten Partikel daher weniger als 10 Gew.-%, besonders bevorzugt weniger als 1 Gew.-%, Rutil, bezogen auf $TiO_2$. Besonders bevorzugt sind Titandioxidpartikel, die im Röntgendiffraktogramm deutlich eine Anatas-Struktur zeigen.

Die Titanoxidhydratpartikel können beispielsweise durch Hydrolyse einer schwefelsäurehaltigen Titanylsulfatlösung erhalten werden. Je nach Herkunft und Zusammensetzung der schwefelsäurehaltigen Titanylsulfatlösung wird bei der Hydrolyse eine schwefelsaure Suspension von Titanoxidhydrat erhalten, welche noch unerwünschte Verunreinigungen, insbesondere Schwermetalle, enthalten kann. In der Regel werden deshalb ein oder mehrere Reinigungsschritte vorgenommen, um das Titanoxidhydrat von unerwünschten Verunreinigungen zu befreien.

Bevorzugt werden Titanoxidhydratpartikel verwendet, die durch Hydrolyse von Titanylsulfat entstehen, welches beim Herstellungsverfahren für Titandioxid nach dem Sulfatverfahren anfällt. Dieses Verfahren wird beispielsweise in Industrial Inorganic Pigments 2. Auflage, Hrsg. Gunter Buxbaum, Wiley-VCH, 1998 beschrieben.

Besonders bevorzugt wird dabei das nach der Hydrolyse erhaltene Titanoxidhydrat von anhaftenden Verunreinigungen befreit, indem es filtriert und gewaschen und gegebenenfalls noch zusätzlich dem Verfahrensschritt der so genannten Bleiche, einer chemischen Behandlung mit Reduktionsmitteln zur Eliminierung von 3-wertigem Eisen, unterzogen wird.

Die großtechnische Herstellung von Titanoxidhydrat auf Grundlage des Sulfatverfahrens für die Titandioxidherstellung hat weiterhin den Vorteil einer konstanten Produktqualität und ständigen Verfügbarkeit.

Um eine besonders hohe Reinheit zu erhalten, ist es vorteilhaft, nicht die großtechnische metallionenhaltige schwefelsäurehaltige Titanylsulfatlösung zu verwenden, sondern eine synthetische schwefelsäurehaltige Titanylsulfatlösung, welche nur geringe Mengen an Verunreinigungen enthält. Eine solche Titanylsulfatlösung kann beispielsweise durch Hydrolyse von hochreinem $TiCl_4$ oder Titanestern und Lösen des erhaltenen Präzipitats mit Schwefelsäure hergestellt werden. Die Herstellung eines hochreinen Titanoxidhydrats daraus kann entweder analog zu herkömmlichen großtechnischen Prozessen oder mit spezifischen Abweichungen erfolgen.

Bevorzugt wird die anhaftende Schwefelsäure durch Umsetzung mit einer Base (z.B. NaOH, KOH, $NH_3$) und anschließendes Auswaschen des entstandenen Sulfats entfernt.
Gegebenenfalls kann eine nachfolgende Eliminierung der durch die Umsetzung mit der Base eingebrachten Kationen durch Umsetzung mit thermisch leicht zersetzbaren Säuren (z.B. Carbonsäuren oder Salpetersäure) und anschließendes Auswaschen bewerkstelligt werden.

Je nach gewünschter Reinheit können die oben beschriebenen Umsetzungen mehrfach wiederholt werden.

Besonders vorteilhaft bei dem aus Titanylsulfat erhaltenen Titanoxidhydrat sind seine hohe Reinheit bezüglich Eisen und anderer Schwermetalle sowie seine extrem geringen Gehalte an Chlorid und Kohlenstoff.

Es kann vorteilhaft sein, die Titandioxidpartikel durch einen Kalzinier- oder Temperschritt zu behandeln, um die Teilchengröße und Reaktivität gezielt zu modifizieren. Insbesondere kann die Umwandlung von mikrokristallinem Titanoxidhydrat in etwas größere Anatas-Kristallite vorteilhaft sein. Dabei sollte der Kalzinier- oder Temperschritt jedoch so durchgeführt werden, dass die besonderen Eigenschaften des Titanoxidhydrats nicht verloren gehen, d.h. der Anteil an chemisorbiertem Wasser (z.B. in Form von Hydroxylgruppen) sollte nicht kleiner als 0,4 Gew.-%, bevorzugt 2,0 Gew.-%, werden, um eine möglichst reaktive Oberfläche des Titanoxidhydrats beizubehalten.

Bei mit hohen Temperaturen kalziniertem Titanoxidhydrat geht die Reaktivität deutlich zurück, während sich das Titanoxidhydrat zu makrokristallinem $TiO_2$ mit einer Kristallgröße von größer als 100 nm in der Anatas- oder Rutilmodifikation mit einem Gehalt an chemisorbiertem Wasser von kleiner als 0,4 Gew.-% umwandelt. Außerdem wird - wie oben bereits erwähnt - durch gröbere titanhaltige Partikel die Ausbildung eines gröberen Erdalkalititanats induziert.

Erfindungsgemäß werden bevorzugt Titanoxidhydratpartikel verwendet, die nach einstündigem Glühen einer nach ISO 787 Teil 2 vorgetrockneten Probe bei einer Temperatur von 1000 °C einen Glühverlust von mehr als 2 Gew.-%, bevorzugt mehr als 6 Gew.-% und/oder die nach einstündigem Glühen bei 500 °C einen Glühverlust von mehr als 0,8 Gew.-%, bevorzugt mehr als 1,2 Gew.-%, aufweisen.

Durch die beschriebenen erfindungsgemäßen Verfahrensschritte, durch die im Vergleich zu herkömmlichen Gasphasenprozessen ein technisch und wirtschaftlich verbesserter Produktionsprozess zur Bildung nanopartikularer titanoxidhydrathaltiger Materialien zur Verfügung gestellt wird, werden Primärpartikel des Titanoxidhydrats mit einer mittleren Teilchengröße von 3 bis 15 nm, bevorzugt 4 bis 8 nm, erhalten.

Die Primärpartikel sind kleine, näherungsweise kugelförmige, mikrokristalline Partikel mit einer gittergestörten Anatasstruktur. Die Teilchengröße kann durch Berechnung aus der BET-Oberfläche unter Annahme einer monomodalen Korngrößenverteilung von kugelförmigen Partikeln ermittelt werden. Die Beziehung zwischen der mittleren Teilchengröße d und der spezifischen Oberfläche $S_{BET}$ (ermittelt nach BET) ist unter der Voraussetzung einer monomodalen Korngrößenverteilung und kugelförmigen Partikeln durch die Gleichung

$$d_{Partikel} = \frac{6}{\rho \cdot S_{BET}}$$

mit $S_{BET}$ in m²/g, $\rho$ = Dichte des Partikels in g/cm³, d in μm gegeben. Die verwendeten Dichten sind: 6,02 g/cm³ (für BaTiO₃), 3,90 g/cm³ (für TiO₂ als Titanoxidhydrat oder Anatas), 4,26 g/cm³ (für TiO₂ als Rutil).

Es wurde überraschend gefunden, dass die erfindungsgemäß verwendeten Titandioxidpartikel bezüglich ihrer Eignung zur Herstellung von Erdalkalititanaten deutliche Vorteile gegenüber herkömmlichem Titandioxid, wie z.B. handelsübliche technische Titandioxide, aufweisen. So werden vermutlich aufgrund der hohen spezifischen Oberfläche, der geringen Partikelgröße von Titanoxidhydrat und der hohen Reaktivität bei der Umsetzung mit Erdalkaliverbindungen besonders feinteilige Erdalkalititanate erhalten.

Außerdem wirken sich der geringe Chlorid- und Kohlenstoffgehalt der erfindungsgemäßen Titanoxidhydratpartikel positiv auf die Eigenschaften der Erdalkalititanate aus. Der geringe Gehalt an Chlorid und metallischen Spurenelementen wirkt sich günstig auf die elektrischen Eigenschaften der aus Titanoxidhydrat hergestellten Erdalkalititanate aus, während der niedrige Gehalt an Kohlenstoff gewährleistet, dass keine intermediäre Reduktion von TiO₂ und keine intermediäre Bildung von Erdalkalicarbonaten erfolgt und deshalb besonders feinteilige Erdalkalititanate erhalten werden können. Insbesondere bei niedrigen Umsetzungstemperaturen zum Erdalkalititanat ist die Anwesenheit von Halogeniden oder Kohlenstoff störend.

Die Erdalkalimetallverbindung

Die Titandioxidpartikel werden erfindungsgemäß mit einer oder mehreren Erdalkalimetallverbindungen umgesetzt. Hierbei handelt es sich in der Regel um Salze eines der Erdalkalimetalle Magnesium, Calcium, Strontium und/ oder Barium, ggf. versetzt mit Blei oder Yttrium, und/oder deren Mischungen. Bariumverbindungen zur Herstellung von Bariumtitanat (BaTiO₃) sind besonders bevorzugt. Die Salze umfassen Carbonate, Oxalate, Hydroxide, Oxide, Nitrate, Halogenide wie Chloride, wie auch organische Verbindungen wie Alkoxide und Salze von Carbonsäuren.

Besonders bevorzugt sind oxidische Erdalkalimetallverbindungen oder Erdalkaliverbindungen, die bei einer Temperatur unterhalb von 600°C Erdalkalimetalloxid bilden. Unter den Bariumsalzen sind somit Bariumhydroxid, Bariumnitrat sowie andere leicht zersetzliche Bariumverbindungen bzw. Mischungen hiervon besonders bevorzugt. Bariumcarbonat bildet hingegen erst bei höheren Temperaturen (ca. 1000°C) Bariumoxid.

Die Zersetzungstemperaturen können z.B. in kombinierten Thermogravimetrie (TG)- und Differenzthermoanalyse (DTA)-Apparaturen ermittelt werden.

Bei Verwendung von Erdalkaliverbindungen mit hoher Zersetzungstemperatur wird der Vorteil der Feinteiligkeit der Titankomponente nicht optimal genutzt: Bei den zur Zersetzung der Erdalkaliverbindung notwendigen Temperaturen hat bereits eine Versinterung und Vergröberung der Titankomponente stattgefunden. Dennoch kann auch bei Verwendung von erst bei hohen Temperaturen sich zersetzenden Erdalkaliverbindungen (wie z.B. Erdalkalicarbonaten) durch feinteilige Titankomponenten eine gewisse Verbesserung der Feinteiligkeit der Erdalkalititanate erreicht werden (siehe auch Hennings (J. Am. Ceram. Soc. 84 (2001) 2777-2782)).

Zur Reaktionsführung

Die vorstehend charakterisierten Titandioxidhydratpartikel werden erfindungsgemäß in einem Verfahren zur Herstellung von Erdalkalititanaten mit den vorstehend genannten Erdalkalimetallverbindungen verwendet.

Zur Herstellung von Erdalkalititanat (z.B. BaTiO₃) können die Titandioxidpartikel und die Erdalkalimetallverbindung (z.B. Bariumnitrat oder Bariumhydroxid) gemeinsam trocken gemahlen und anschließend bei einer Temperatur unterhalb von 600°C kalziniert werden.

Alternativ können die Titandioxidpartikel auch mit einer wasserlöslichen Erdalkalimetallverbindung (z.B. Bariumnitrat oder Bariumhydroxid) zu Erdalkalititanat (z.B. BaTiO₃) umgesetzt werden, wobei die Partikel in der bereits hergestellten Ba²⁺-haltigen Lösung oder zusammen mit dem Ba-Salz in Wasser suspendiert, anschließend das Lösungsmittel verdampft und das Gemenge unterhalb 600 °C kalziniert wird.

Die Mengenverhältnisse Erdalkaliverbindung / Titandioxidpartikel werden durch exakte Einwaage eingestellt. Das molare Verhältnis Ba:Ti kann dabei entsprechend der konkreten Anwendungsanforderung des Bariumtitanates von 1 abweichen.

Die Erfindung stellt somit auch eine Zubereitung enthaltend Titanoxidhydratpartikel mit einer BET-Oberfläche von mehr als 50 m²/g und eine wasserlösliche Erdalkaliverbindung bereit, wobei das Molverhältnis von Titan und Erdalkalimetall zwischen 0,95 und 1,05 liegt. Bevorzugt liegt eine solche Zubereitung in getrockneter Form vor. Bei der Herstellung dieser Zubereitung als Zwischenprodukt für das Titanat können gegebenenfalls Dotierungsverbindungen zugegeben werden.

Daraus durch Kalzinierung erhältliche halbleitend dotierte Erdalkalititanate sind die wesentlichen Bestandteile von temperaturabhängigen Widerständen.

Als Dotierungsverbindungen können z.B. La-, Y-, Nb- oder Sb-Salze in Größenordnungen von 0,05 bis 1,0 mol% bezogen auf $BaTiO_3$ zugegeben werden.

Besonders bevorzugt wird eine wasserlösliche Bariumverbindung oder eine wässrige Bariumsalzlösung zu einer wässrigen Suspension von Titanoxidhydrat gegeben und diese Suspension getrocknet. Dabei wird ein Titanoxidhydrat erhalten, auf dessen Oberfläche die Erdalkaliverbindung gleichmäßig verteilt ist. Das so erhaltene und mit der Erdalkalimetallverbindung imprägnierte Titanoxidhydrat kann anschließend kalziniert werden.

Es ist auch möglich, die Trocknung und Kalzinierung in einem einzigen Verfahrensschritt durchzuführen.

Die Kalzinierung der Titandioxidpartikel mit der Erdalkalimetallverbindung erfolgt vorzugsweise nicht isotherm, sondern bei näherungsweise konstanter Umwandlungsrate zum Erdalkalititanat (SCRT-Methode, beschrieben in Gotor et al., J.Europ.Cer.Soc.23 (2003), 505-513).

Es hat sich zudem überraschend gezeigt, dass eine Kalzinierung bei einer Temperatur möglich ist, die unterhalb der Zersetzungstemperatur der reinen Erdalkalimetallverbindung zum Oxid liegt. Im Hinblick auf die Feinheit des erhaltenen Titanats ist es erfindungsgemäß möglich, die Kalzinierung bei einer Temperatur durchzuführen, die im Bereich von 50 °C bis 200 °C unterhalb der Zersetzungstemperatur der verwendeten Erdalkalimetallverbindung zum Oxid liegt.

Von Vorteil für die Eigenschaften des nach dem vorliegenden erfindungsgemäßen Verfahren hergestellten Erdalkalititanats ist es insbesondere, wenn das Molverhältnis von Niob zu Aluminium in dem Erdalkalititanat 0,5 bis 1,5, bevorzugt 0,8 bis 1,2, beträgt, welches gegebenenfalls durch Zugabe einer entsprechenden Menge einer Aluminiumverbindung herbeigeführt werden kann. Ein solches Material zeichnet sich durch besonders gute elektrische Eigenschaften (z.B. niedrige Leitfähigkeit) aus.

Im Anschluss an die Kalzinierung kann das Erdalkalititanat durch Mahlen, z.B. Perlmahlung, weiter zerkleinert werden.

Das Erdalkalititanat kann auch unter hydrothermalen Bedingungen direkt durch Umsetzung der Titandioxidpartikel mit einer Erdalkaliverbindung erhalten werden. So kann eine Ba(OH)2-Lösung bei pH>13, einer Temperatur von größer oder gleich 100 °C über eine Zeit von vorzugsweise mindestens 1 Stunde in einem Autoklaven mit den Titandioxidpartikeln umgesetzt werden, wobei direkt Bariumtitanat erhalten wird.

Das Erdalkalititanat

Die Erfindung stellt ein Erdalkalititanat bereit, das gemäß dem erfindungsgemäßen Verfahren erhältlich ist.

Die erfindungsgemäß erhaltenen Erdalkalititanate weisen bevorzugt eine BET-Oberfläche von mehr 5 bis 100 $m^2/g$, besonders bevorzugt 20 bis 60 $m^2/g$, auf.

Die erfindungsgemäß erhaltenen Erdalkalititanate weisen bevorzugt in ungemahlenem Zustand eine BET-Oberfläche von mehr 5 bis 50 $m^2/g$, besonders bevorzugt 15 bis 40 $m^2/g$, auf. Durch elektronenmikroskopische Aufnahmen kann der Fachmann zwischen gemahlenen und ungemahlenen Pulvern unterscheiden.

Der Chloridgehalt des Titanats beträgt vorzugsweise weniger als 100 ppm, besonders bevorzugt weniger als 10 ppm.

Der Niobgehalt des Titanats beträgt vorzugsweise 10 bis 300 ppm, besonders bevorzugt 15 bis 100 ppm.

Das Mol-Verhältnis Aluminium zu Niob liegt bevorzugt zwischen 0,5 und 1,5. Die Bestimmung von Nb und A1 erfolgt mittels ICP.

Vorzugsweise enthält das erfindungsgemäße Erdalkalititanat zudem weniger als 500 ppm, bevorzugt weniger als 200 ppm, Sulfat.

Vorzugsweise enthält das erfindungsgemäße Erdalkalititanat weniger als 200 ppm Natrium oder Kalium.

Vorzugsweise enthält das erfindungsgemäße Erdalkalititanat zudem weniger als 20 ppm Eisen, bevorzugt weniger als 5 ppm.

$BaTiO_3$, welches nach einem der erfindungsgemäßen Verfahren hergestellt wurde, weist bevorzugt eine Teilchengröße von weniger als 250 nm auf.

Die Phasenreinheit des erfindungsgemäßen Produktes kann mittels Pulverröntgendiffraktometrie (XRD) bestimmt werden.

Mikroelektronische Bauelemente

Die erfindungsgemäßen Erdalkalititanate, insbesondere $BaTiO_3$, können zur Herstellung eines mikroelektronischen Bauelements, z.B. eines kapazitiven oder PTC-Baulements, verwendet werden. Aufgrund der Feinteiligkeit der erhaltenen Erdalkalititanate können besonders dünne Schichten und deshalb besonders kleine Bauteilabmessungen realisiert werden. Insbesondere die Anwendung in keramischen Vielschichtkondensatoren (MLCC) kommt in Betracht, wobei aufgrund der Feinteiligkeit des erfindungsgemäßen Erdalkalititanats besonders dünne Schichten (kleiner 2,5 $\mu$m, besonders bevorzugt 0,1 bis 2 $\mu$m) erhalten werden können. Solche Bauelemente können hergestellt werden, indem man aus dems Erdalkalititanat ggf. zusammen mit organischen Additiven einen Schlicker herstellt und diesen mit verschiedenen Methoden (Spin-Coating, Dip-Coating, doctor-blade-Methode) zu dünnen Filmen auszieht. PTC-Bauelemente können nach den Versetzen des Erdalkalititanates mit einen Presshilfsmittel zu einem Grünkörper gepresst werden, der anschließend gesintert wird.

**Beispiele**

Die Erfindung wird im Folgenden anhand einiger ausgewählter Beispiele näher erläutert, wobei die Erfindung keineswegs auf diese Beispiele beschränkt ist.

Beispiel 1:

Bariumtitanat aus Titanoxidhydrat und Bariumhydroxid

78,87 g $Ba(OH)_2$ * 8 $H_2O$ (Fluka, p.a.) und 21,95 g Titanoxidhydrat (9 Gew.-% flüchtige Bestandteile, Anatas, BET: 271 m$^2$/g, entspricht einer Kristallitgröße von 6 nm; analytische Angaben bezogen auf $TiO_2$: 700 ppm S, <20 ppm Cl, 310 ppm Nb, 10 ppm Fe, <0,1% C; Abb. 1 zeigt das Röntgendiffraktogramm) werden mit 1,5 Liter entgastem, destilliertem Wasser in einen 2 1-Kolben gegeben. Das Gemenge wird 1 Stunde bei 50 °C unter Rühren gelöst bzw. suspendiert. Anschließend wird bei 50 °C unter Unterdruck am Rotationsverdampfer das Lösungsmittel Wasser entfernt. Das erhaltene Pulver wird im Exsikkator getrocknet. Zur Vermeidung der Bildung von $BaCO_3$ durch Reaktion von Ba $(OH)_2$ mit $CO_2$ der Luft werden die Arbeitsschritte unter SchutzgasAtmosphäre durchgeführt.

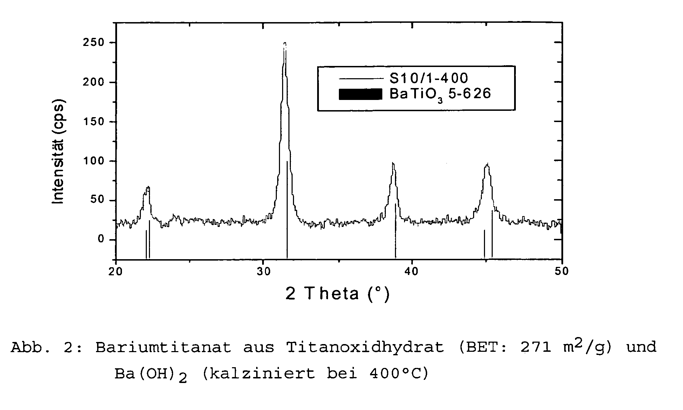

Die Kalzination des Pulvers unter Bildung von $BaTiO_3$ erfolgt bei Temperaturen T größer oder gleich 360 °C. Nach der Temperaturbehandlung bei 400 °C für 2 Stunden wird ein Produkt mit einer spezifischen Oberfläche (bestimmt nach BET) von 27,6 m$^2$/g erhalten (s. Abb. 2), nach der Temperaturbehandlung bei 600 °C für 2 Stunden ein Produkt mit einer spezifischen Oberfläche (bestimmt nach BET) von 12,8 m$^2$/g erhalten. Als kristalline Phase wird mittels Röntgendiffraktometrie (XRD) jeweils ausschließlich $BaTiO_3$ nachgewiesen. Die aus den spezifischen Oberflächen errechneten $BaTiO_3$-Kristallitgrößen sind 36 bzw. 78 nm. Nach der Temperung bei 1000 °C (2 Stunden) beträgt die BET-Oberfäche 3,2 m$^2$/g, dies entspricht einer Kristallitgröße von 310 nm.

Nach Perlmahlung einer 25%-igen Suspension des bei 600°C kalzinierten Produkts (20 Minuten diskontinuierliche Perlmahlung mit Zirkonsilikat-Mahlperlen von 0,4-0,6 mm Durchmesser) weist das erhaltene gemahlene und getrocknete Bariumtitanat eine BET-Oberfläche von 32,5 m$^2$/g auf.

Beispiel 2:

Bariumtitanat aus Titanoxidhydrat und Bariumoxalat

56,34 g $BaC_2O_4$ (hergestellt durch Alfa Aesar, Karlsruhe) und 21,95 g Titanoxidhydrat (Zusammensetzung wie in Beispiel 1) werden mit 0,313 Liter destilliertem Wasser und 78 g PVCummantelten Stahlkugeln 24 Stunden in einer PVC-Trommel gemischt/gemahlen. Nach dem Absaugen und Trocknen wird die Pulvergemenge kalziniert. Für einen vollständigen Umsatz des sich intermediär aus dem Bariumoxalat bildenden $BaCO_3$ mit $TiO_2$ unter Bildung von $BaTiO_3$ sind Temperaturen von 950 °C erforderlich. Nach der Temperung bei 1000 °C (2 Stunden) beträgt die BET-Oberfäche 2,8 m$^2$/g, dies entspricht einer $BaTiO_3$-Kristallitgröße von 350 nm.

Beispiel 3:

Bariumtitanat aus Titanoxidhydrat und Bariumcarbonat

49,34 g $BaCO_3$ (Solvay, Sabed VL 600, Lot.-Nr. 325510) und 21,95 g Titanoxidhydrat (Zusammensetzung wie in Beispiel 1) werden mit 0,280 Liter destilliertem Wasser und 70 g PVCummantelten Stahlkugeln 24 Stunden in einer PVC-Trommel gemischt/gemahlen. Nach dem Absaugen und Trocknen wird die Pulvergemenge kalziniert. Für einen vollständigen Umsatz des $BaCO_3$ mit $TiO_2$ unter Bildung von $BaTiO_3$ sind Temperaturen von 950 °C erforderlich. Nach der Temperung bei 1000 °C (2 Stunden) beträgt die BET-Oberfäche 2,2 m$^2$/g, dies entspricht einer $BaTiO_3$-Kristallitgröße von 450 nm.

Beispiel 4:

Bariumtitanat aus Titanoxidhydrat und Bariumnitrat

65.34 g Ba(NO$_3$)$_2$ (p.a.) und 21,71 g Titanoxidhydrat (8 Gew.-% flüchtige Bestandteile, Anatas, BET: 331 m$^2$/g, entspricht einer Kristallitgröße von 5 nm; 6400 ppm S, <20 ppm Cl, 78 ppm Nb, <10 ppm Fe, <1000 ppm C) werden mit 1,0 Liter destilliertem Wasser in einen 2 1-Kolben gegeben. Das Gemenge wird 10 Minuten bei 50 °C unter Rühren gelöst bzw. suspendiert. Anschließend wird bei 50 °C unter Unterdruck am Rotationsverdampfer das Lösungsmittel Wasser entfernt. Das erhaltene Pulver wird im Trockenschrank bei 120 °C getrocknet.

Die Kalzination des Pulver unter Bildung von BaTiO$_3$ erfolgt bei Temperaturen von 600 °C. Nach der Temperaturbehandlung bei 600 °C für 2 Stunden wird ein Produkt mit einer spezifischen Oberfläche (bestimmt nach BET) von 3,6 m$^2$/g erhalten. Als kristalline Phase wird BaTiO$_3$ erhalten. Nach der Temperaturbehandlung bei 800 °C für 2 Stunden wird ein Produkt mit einer spezifischen Oberfläche (bestimmt nach BET) von 2,7 m$^2$/g erhalten. Als alleinige kristalline Phase wird mittels Röntgendiffraktometrie (XRD) BaTiO$_3$ nachgewiesen. Die aus den spezifischen Oberflächen errechneten BaTiO$_3$ Kristallitgrößen sind 277 bzw. 369 nm.
Nach der Temperung bei 1000 °C (2 Stunden) beträgt die BET-Oberfäche 1,5 m$^2$/g, dies entspricht einer Kristallitgröße von 664 nm. Nach Perlmahlung liegen die BET-Oberfächen aller Proben über 5 m$^2$/g.

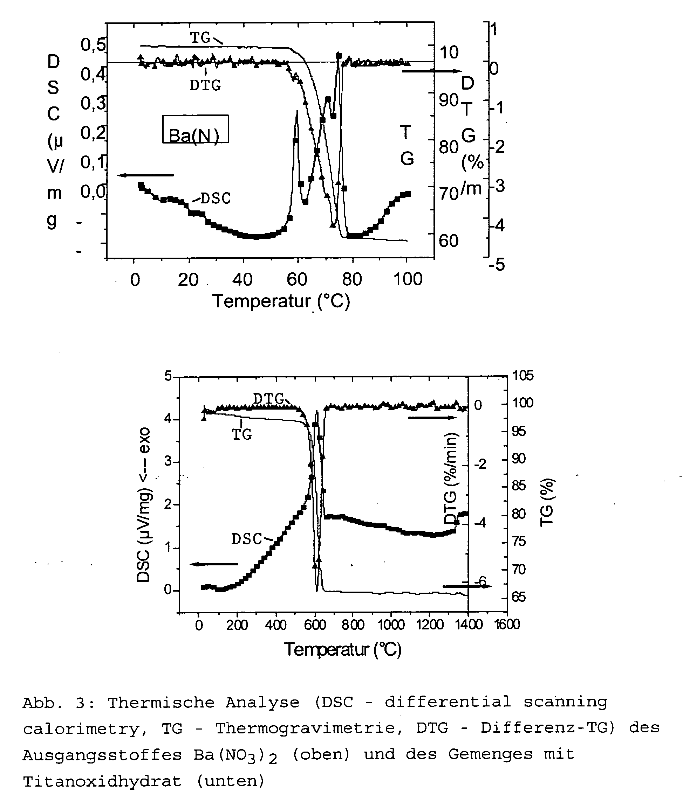

Überraschenderweise finden die Zersetzungsprozesse von Ba(NO$_3$)$_2$ im Gemenge mit TiO$_2$ deutlich akzentuierter und eindeutiger statt als in der reinen Substanz (s.Abb.3). Bei ca. 600 °C ist die Zersetzung nach einem Schritt fast vollständig abgeschlossen. Im Gegensatz dazu setzt sich die reine Substanz über die Zwischenstufe Ba(NO$_2$)$_2$ erst bei ca. 750 °C vollständig um.

Nach dem Kalzinieren der Probe bei 600 °C für 2 h werden neben dem kristallinen BaTiO$_3$ noch geringe Mengen unumgesetztes Ba(NO$_3$)$_2$ gefunden, welches über eine Verlängerung der Kalzinationsdauer vollständig in das BaTiO$_3$ überführt werden kann.

Nach einer Kalzination bei 400 °C liegt nur das Gemenge der Ausgangsstoffe vor.

Beispiel 5:

Kompensation von Nb mit unterschiedlichen Mengen an Al:

Als Ausgangsstoffe dienten BaCO$_3$ (Solvay Sabed VL 600) und eine Titanoxidhydrat-Probe (9 Gew.-% flüchtige Bestandteile, Anatas, BET: 316 m2/g, entspricht einer Kristallitgröße von 5 nm; analytische Daten bezogen auf TiO$_2$: 2300 ppm S, < 20 ppm Cl, 7 ppm Al, 6 ppm Fe, < 0.1 % C, und mit einem Niob-Gehalt von 810 ppm (Massenanteil) (entspricht ca. 0.07 mol%). Zur Kompensation des Niobs wurde Aluminium in Form des wasserlöslichen Salzes Al (NO$_3$)$_3$•9H$_2$O zugeführt. 148,126 g BaCO$_3$ wurden mit 65,723g TiO$_2$ und 0,2142 g Al(NO$_3$)$_3$•9H$_2$O mit 213,8 g kunststoffummantelten Stahlkugeln in 856 ml destilliertem Wasser in einer Kugelmühlen 24 Stunden gemahlen/gemischt. Dieser Suspension wurde das Mahlmedium Wasser im Rotationsverdampfers (ca. 50 °C, 60 mbar) unter Ausfällung der Al-Komponente entzogen und anschließend bei 120 °C im Trockenschrank getrocknet. Danach erfolgte die Calcinierung des Gemenges für zwei Stunden bei 1.100 °C. Die daraus erhaltenen Pulver wurden mit Stahlkugeln und der vierfachen Menge an Wasser 24 Stunden feingemahlen, um die während der Calcination gebildeten Agglomerate zu zerstören. Nach dem Absaugen der Suspension wurde das Pulver 24 Stunden bei 120 °C getrocknet, auf Raumtemperatur abgekühlt und mit einem Presshilfsmittel (Mischung aus Polyvinylalkohol, Wasser und Glycerin) 24 Stunden auf der Kugelmühle vermengt ("Anmachen"). Dieses angemachte Pulver wurde anschließend in einer mehrstufigen Prozedur zu Tabletten (den sogenannten "Grünlingen") gepresst. Die Tabletten wurden anschließend bei vier verschiedenen Temperaturen im Bereich zwischen 1.250 °C und 1.400 °C gesintert. Die gesinterten Tabletten wurden geschliffen und anschließend mit einer In-Ga-Legierung auf den Stirnseiten der Tabletten versehen. Der spezifische Widerstand wurde bei Raumtemperatur ermittelt. In Abb. 5 ist der spezifische Widerstand der Keramiken als Funktion des Kompensationsgrades aufgetragen.

Beispiel 6:

Hydrothermale Umsetzung von Titanoxidhydrat mit Bariumhydroxid

Es wurden 12,62 g (0,04 mol) Ba(OH)$_2$•8H$_2$O (p.A. Fluka Chemie GmbH) wurden mit 3,51 g Titanoxidhydrat (Zusammensetzung wie in Beispiel 1) und 150 ml destilliertem und entgastem Wasser in einen Teflon-Becher gegeben. Das molare Ti/Ba-Ausgangsverhältnis betrug 1.0. Der Umsatz erfolgte bei 100 °C unter Rühren der Reaktionsmischung in einem Laborautoklaven (Berghoff HR 200) mit einer Haltezeit von einer Stunde. Um eine mögliche Bildung von Bariumcarbonat zu vermeiden, wurde entgastes, CO$_2$-freies Wasser eingesetzt. Unter den gewählten Ba(OH)$_2$/Lösungs-

mittel Wasser-Verhältnissen stellt sich ein pH-Wert von 13,7 ein. Nach der Reaktion wurde der Feststoff über eine Filterfritte G4 abgesaugt, mehrmals mit destilliertem Wasser gewaschen bis ein pH-Wert von pH = 9 resultierte und anschließend für 24 h bei 120 °C im Trockenschrank getrocknet. Die erhaltenen Reaktionsprodukt weist eine spezifische Oberfläche (nach BET) von 20,7 m²/g auf und ist röntgendiffraktometrisch eindeutig als $BaTiO_3$ zu charakterisieren. Bei Verwendung von grobteiligem Titandioxid (hochkristalliner Rutil, BET: 6 m²/g, wie in Vergleichsbeispiel 1) anstelle des Titanoxidhydrats findet so gut wie keine Umsetzung zu Bariumtitanat statt. Im Diffraktogramm sind neben den Rutil-Reflexen nur geringe Hinweise auf $BaCO_3$ (bei 2Θ = 24°) und $BaTiO_3$ (bei 2Θ = 31.6°) zu erkennen.

Vergleichsbeispiel 1:

Umsetzung von grobem Titandioxid mit Bariumhydroxid

78,87 g $Ba(OH)_2$ * 8 $H_2O$ (Fluka, p.a.) und 19,98 g Titandioxid (hochkristalliner Rutil, BET: 6 m²/g, entspricht einer Kristallitgröße von 250 nm) werden mit 1,5 Liter entgastem, destilliertem Wasser in einen 2 1-Kolben gegeben. Das Gemenge wird 1 Stunde bei 50 °C unter Rühren gelöst bzw. suspendiert. Anschließend wird bei 50 °C unter Unterdruck am Rotationsverdampfer das Lösungsmittel Wasser entfernt. Das erhaltene Pulver wird im Exsikkator getrocknet. Zur Vermeidung der Bildung von $BaCO_3$ durch Reaktion von $Ba(OH)_2$ mit $CO_2$ der Luft werden die Arbeitsschritte unter SchutzgasAtmosphäre durchgeführt.

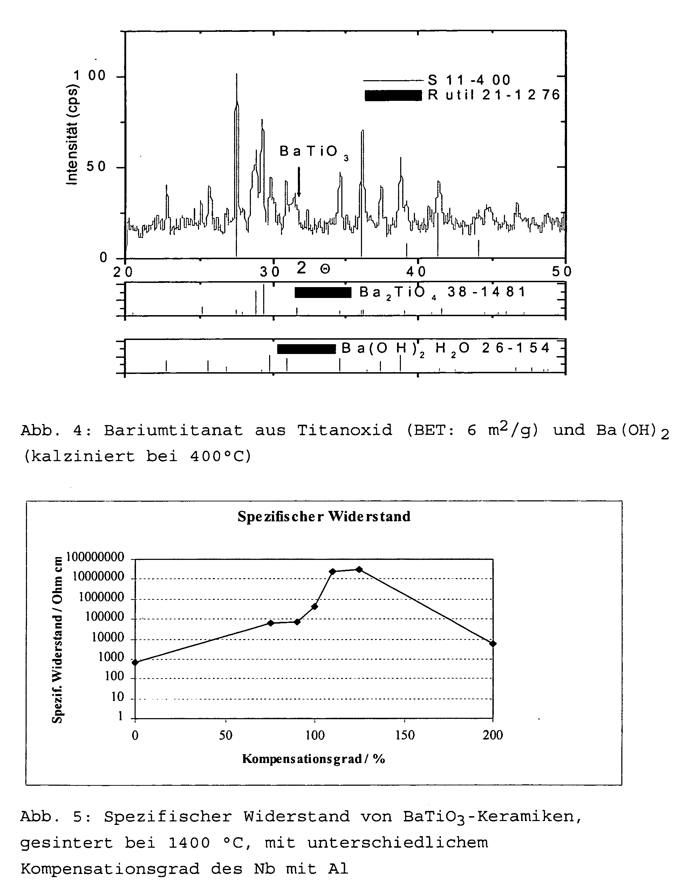

Die Kalzination des Pulvers erfolgt bei Temperaturen von ca. 360 °C. Nach der Temperaturbehandlung bei 400 °C für 2 Stunden wird ein Produkt mit einer spezifischen Oberfläche (bestimmt nach BET) von 2,5 m²/g erhalten (s. Abb. 4), nach der Temperaturbehandlung bei 600 °C für 2 Stunden ein Produkt mit einer spezifischen Oberfläche (bestimmt nach BET) von 2,2 m²/g und nach der Temperaturbehandlung bei 1000 °C für 2 Stunden ein Produkt mit einer spezifischen Oberfläche (bestimmt nach BET) von 1,9 m²/g erhalten.

Im Gegensatz zu Beispiel 1 ist die Hauptphase nach der Temperung bei 400 °C Rutil, neben $Ba_2TiO_4$ und $BaTiO_3$ sowie unumgesetztem bzw. rückreagiertem $Ba(OH)_2$ $H_2O$. Nach der Temperung bei 600 °C und 1000 °C ist ebenfalls kein vollständiger Umsatz zu $BaTiO_3$ festzustellen. Es treten als Nebenphasen Rutil und $Ba_2TiO_4$ auf.

Vergleichsbeispiel 2:

Bariumtitanat aus grobem Titandioxid und Bariumcarbonat

98,67 g $BaCO_3$ (hergestellt von Solvay, Sabed VL 600, Lot.-Nr. 325510) und 39,95 g Titandioxid (hochkristalliner Rutil, BET: 6 m²/g, entspricht einer Kristallitgröße von 250 nm) werden mit 0,550 Liter destilliertem Wasser und 139 g PVCummantelten Stahlkugeln 24 Stunden in einer PVC-Trommel gemischt/gemahlen. Nach dem Absaugen und Trocknen werden die Pulvergemenge kalziniert. Für einen vollständigen Umsatz des $BaCO_3$ mit $TiO_2$ unter Bildung von $BaTiO_3$ sind Temperaturen von ca. 950 °C erforderlich. Nach der Temperung bei 1000 °C (2 Stunden) beträgt die BET-Oberfäche 2,0 m²/g, dies entspricht einer $BaTiO_3$-Kristallitgröße von 500 nm.

**Patentansprüche**

1.   Verfahren zur Herstellung von Erdalkalititanaten durch Umsetzung von Erdalkalimetallverbindungen mit Titandioxidpartikeln mit einer BET-Oberfläche von mehr als 50 m²/g.

2.   Verfahren nach Anspruch 1, **dadurch gekennzeichnet, dass** die Titandioxidpartikel weniger als 1000 ppm Halogenide, bezogen auf $TiO_2$, enthalten.

3.   Verfahren nach einem der Ansprüche 1 oder 2, **dadurch gekennzeichnet, dass** die Titandioxidpartikel weniger als 1000 ppm Kohlenstoff, bezogen auf $TiO_2$, enthalten.

4.   Verfahren nach einem der vorhergehenden Ansprüche, **dadurch gekennzeichnet, dass** die Titandioxidpartikel in der Anatas-Kristallstruktur vorliegen.

5.   Verfahren nach einem der vorhergehenden Ansprüche, **dadurch gekennzeichnet, dass** die Titandioxidpartikel weniger als 100 ppm Chlorid, bezogen auf $TiO_2$, enthalten.

6.   Verfahren nach einem der vorhergehenden Ansprüche, **dadurch gekennzeichnet, dass** die BET-Oberfläche der Titandioxidpartikel 200 bis 380 m²/g beträgt.

7. Verfahren nach einem der vorhergehenden Ansprüche, **dadurch gekennzeichnet, dass** die Titandioxidpartikel weniger als 200 ppm Natrium und weniger als 200 ppm Kalium, bezogen auf $TiO_2$, enthalten.

8. Verfahren nach einem der vorhergehenden Ansprüche, **dadurch gekennzeichnet, dass** die Titandioxidpartikel Titanoxidhydratpartikel mit einem $H_2O$-Gehalt von 0,4 bis 25 Gew.-% sind.

9. Verfahren nach Anspruch 8, **dadurch gekennzeichnet, dass** die Titanoxidhydratpartikel einen $H_2O$-Gehalt von 2 bis 10 Gew.-%, bezogen auf $TiO_2$, aufweisen.

10. Verfahren nach einem der vorhergehenden Ansprüche, **dadurch gekennzeichnet, dass** die Titandioxidpartikel einen Sulfat-Gehalt von weniger als 1 Gew.-%, bezogen auf $TiO_2$, aufweisen.

11. Verfahren nach einem der vorhergehenden Ansprüche, **dadurch gekennzeichnet, dass** die Titandioxidpartikel, bezogen auf $TiO_2$, 10 bis 2000 ppm Niob enthalten.

12. Verfahren nach einem der vorhergehenden Ansprüche, **dadurch gekennzeichnet, dass** die Titandioxidpartikel weniger als 10 ppm Eisen, bezogen auf $TiO_2$, enthalten.

13. Verfahren nach einem der vorhergehenden Ansprüche, **dadurch gekennzeichnet, dass** die Titandioxidpartikel durch Hydrolyse von Titanylsulfat erhältlich sind.

14. Verfahren nach einem der vorhergehenden Ansprüche, **dadurch gekennzeichnet, dass** die Titandioxidpartikel mit einer oxidischen oder mit einer bei einer Temperatur unterhalb von 600 °C Erdalkalimetalloxid bildenden Erdalkalimetallverbindung umgesetzt werden.

15. Verfahren nach einem der vorhergegenden Ansprüche, **dadurch gekennzeichnet, dass** die Titandioxidpartikel mit einem Erdalkalimetallhydroxid und/oder einem Erdalkalimetallnitrat bei Temperaturen unterhalb von 600°C zu Erdalkalititanat umgesetzt werden.

16. Verfahren nach Anspruch 14 oder 15, **dadurch gekennzeichnet, dass** die Titandioxidpartikel mit einer bei einer Temperatur unterhalb von 600 °C Bariumoxid bildenden Bariumverbindung zu $BaTiO_3$ umgesetzt wird.

17. Verfahren nach Anspruch 16, **dadurch gekennzeichnet, dass** die Titandioxidpartikel und die bei einer Temperatur unterhalb von 600 °C Bariumoxid bildende Bariumverbindung gemeinsam trocken gemahlen und anschließend bei einer Temperatur unterhalb von 600°C kalziniert werden.

18. Verfahren nach einem der Ansprüche 1 bis 16, **dadurch gekennzeichnet, dass** eine Zubereitung aus einer wässrigen Suspension von Titandioxidpartikeln und einer wasserlöslichen Erdalkaliverbindung hergestellt wird, die anschließend getrocknet und unterhalb von 600°C kalziniert wird.

19. Verfahren nach Anspruch 18, **dadurch gekennzeichnet, dass** die wasserlösliche Erdalkaliverbindung Bariumhydroxid oder Bariumnitrat ist.

20. Verfahren nach einem der Ansprüche 17 bis 19, **dadurch gekennzeichnet, dass** die Kalzinierung der Titandioxidpartikel mit der Erdalkalimetallverbindung nicht isotherm, sondern bei näherungsweise konstanter Umwandlungsrate zum Erdalkalititanat erfolgt.

21. Verfahren nach einem der Ansprüche 1 bis 16, **dadurch gekennzeichnet, dass** die Titandioxidpartikel unter hydrothermalen Bedingungen mit einer Erdalkaliverbindung direkt zu einem Erdalkalititanat umgesetzt werden.

22. Verfahren nach einem der Ansprüche 1 bis 16, **dadurch gekennzeichnet, dass** die Titandioxidpartikel unter hydrothermalen Bedingungen in einer $Ba(OH)_2$-Lösung direkt zu $BaTiO_3$ umgesetzt werden.

23. Verfahren nach einem der vorhergehenden Ansprüche, **dadurch gekennzeichnet, dass** bei der Herstellung der Erdalkalititanate soviel einer Aluminiumverbindung zugegeben wird, dass das Molverhältnis von Aluminium zu Niob zwischen 0,5 und 1,5 beträgt.

24. Zubereitung, enthaltend Titanoxidhydratpartikel nach Anspruch 8 bis 13 und eine wasserlösliche Erdalkaliverbindung, wobei das Molverhältnis von Titan und Erdalkalimetall zwischen 0,95 und 1,05 liegt.

25. Zubereitung nach Anspruch 24, wobei die wasserlösliche Erdalkaliverbindung auf den Titanoxidhydratpartikeln abgeschieden und die Mischung anschließend getrocknet wurde.

26. Erdalkalititanat, welches durch ein Verfahren nach einem oder mehreren der Ansprüche 1 bis 23 herstellbar ist.

27. Erdalkalititanat, **dadurch gekennzeichnet, dass** es eine BET-Oberfläche von 5 bis 100 m$^2$/g, einen Chloridgehalt von weniger als 100 ppm, bevorzugt weniger als 10 ppm, und einen Niob-Gehalt von 10 bis 300 ppm, bevorzugt von 15 bis 100 ppm, aufweist.

28. Erdalkalititanat nach Anspruch 26 oder 27, **dadurch gekennzeichnet, dass** es eine BET-Oberfläche von 20 bis 60 m$^2$/g und einen Eisengehalt von weniger als 20 ppmaufweist.

29. Erdalkalititanat nach einem der Ansprüche 26 bis 28, **dadurch gekennzeichnet, dass** es weiterhin Aluminium enthält, so dass das Mol-Verhältnis Aluminium zu Niob zwischen 0,5 und 1,5 beträgt.

30. Erdalkalititanat nach einem der Ansprüche 26 bis 29, **dadurch gekennzeichnet, dass** die BET-Oberfläche der ungemahlenen Probe nach der Kalzinierung 5 bis 50 m$^2$/g, bevorzugt 15 bis 40 m$^2$/g, beträgt.

31. Erdalkalititanat nach einem der Ansprüche 26 bis 30, **dadurch gekennzeichnet, dass** es weniger als 5 ppm Eisen enthält.

32. Erdalkalititanat nach einem oder mehreren der Ansprüche 26 bis 31 **dadurch gekennzeichnet, dass** das Erdalkalititanat BaTiO$_3$ ist.

33. Verwendung eines Erdalkalititanats nach einem oder mehreren der Ansprüche 26 bis 32 zur Herstellung eines mikroelektronischen Bauelements.

34. Verfahren zur Herstellung eines mikroelektronischen Bauelements, wobei ein Erdalkalititanat nach einem der Ansprüche 26 bis 32 gemahlen und anschließend zu einem Grünkörper gepresst wird, der anschließend gesintert wird.

35. Mikroelektronisches Bauelement umfassend ein Erdalkalititanat nach einem oder mehreren der Ansprüche 26 bis 32.

36. Mikroelektronisches Bauelement nach Anspruch 35, wobei das Erdalkalititanat in Form einer Schicht mit einer Dicke von weniger als 2.5 $\mu$m vorliegt.

Abb.1: Röntgendiffraktogramm von Titanoxidhydrat

Abb. 2: Bariumtitanat aus Titanoxidhydrat (BET: 271 m$^2$/g) und Ba(OH)$_2$ (kalziniert bei 400°C)

Abb. 3: Thermische Analyse (DSC - differential scanning calorimetry, TG - Thermogravimetrie, DTG - Differenz-TG) des Ausgangsstoffes Ba(NO₃)₂ (oben) und des Gemenges mit Titanoxidhydrat (unten)

Abb. 4: Bariumtitanat aus Titanoxid (BET: 6 m$^2$/g) und Ba(OH)$_2$ (kalziniert bei 400°C)

Abb. 5: Spezifischer Widerstand von BaTiO$_3$-Keramiken, gesintert bei 1400 °C, mit unterschiedlichem Kompensationsgrad des Nb mit Al

Europäisches
Patentamt

**EUROPÄISCHER RECHERCHENBERICHT**

Nummer der Anmeldung

EP 04 02 1822

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN Bd. 1995, Nr. 02, 31. März 1995 (1995-03-31) & JP 06 316414 A (ISHIHARA SANGYO KAISHA LTD), 15. November 1994 (1994-11-15) * Zusammenfassung * | 1-26 | C01G23/00 C04B35/465 C04B35/468 H01G4/12 |
| X | US 2004/028601 A1 (TONOGAKI TOMOHISA ET AL) 12. Februar 2004 (2004-02-12) * Absätze [0004], [0008] - [0012], [0025] - [0041], [0061] - [0064], [0084], [0085]; Beispiele 1,2; Tabelle 1 * | 1-26 | |
| X | US 2003/012727 A1 (NAKAMURA YASUNARI ET AL) 16. Januar 2003 (2003-01-16) * Absätze [0002], [0007], [0008], [0016], [0019], [0020], [0038], [0040]; Tabellen 1,2 * | 1,26 | |
| X | FERNANDEZ, JOSE FRANCISCO; DURAN, PEDRO; MOURE, CARLOS: "Reaction kinetics in the barium titanate (BaTiO3) synthesis: influence of the titania crystalline structure and morphology" MATERIALS SCIENCE MONOGRAPHS, 1991, Seiten 1973-1982, XP009042188 * das ganze Dokument * | 1,4,6,26 | RECHERCHIERTE SACHGEBIETE (Int.Cl.7) C01G C09C C04B H01G |
| A | EP 0 250 085 A (CORNING GLASS WORKS) 23. Dezember 1987 (1987-12-23) * Seite 3, Zeile 35 - Zeile 40 * * Seite 4, Zeile 53 - Zeile 55 * | 1,26, 33-36 | |

-/--

Der vorliegende Recherchenbericht wurde für alle Patentansprüche erstellt

| Recherchenort | Abschlußdatum der Recherche | Prüfer |
|---|---|---|
| München | 10. Januar 2005 | Nobis, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

EP 1 637 502 A1

<table>
<tr><td>Europäisches<br>Patentamt</td><td>EUROPÄISCHER RECHERCHENBERICHT</td><td>Nummer der Anmeldung<br>EP 04 02 1822</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 618 597 A (TEXAS INSTRUMENTS INC) 5. Oktober 1994 (1994-10-05) * Absätze [0004], [0011], [0012], [0018], [0029], [3034], [0037], [0042], [0043] * | 1,26, 33-36 | |
| A | EP 1 415 955 A (SHOWA DENKO KK) 6. Mai 2004 (2004-05-06) * Seite 2, Zeile 16 - Zeile 22 * | 1,26, 33-36 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| München | 10. Januar 2005 | Nobis, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

**Europäisches**
**Patentamt**

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-26, 33-36 (Teil)

Europäisches
Patentamt

MANGELNDE EINHEITLICHKEIT
DER ERFINDUNG
ERGÄNZUNGSBLATT B

Nummer der Anmeldung

EP 04 02 1822

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-26, 33-36 (Teil)

Verfahren zur Herstellung von Erdalkalititanaten durch Umsetzung von Erdalkalimetallverbindungen mit Titandioxidpartikeln mit einer BET-Oberfläche von mehr als 50 m2/g, sowie das daraus resultierende Erdalkalititanat
---

2. Ansprüche: 27-32, 33-36 (Teil)

Erdalkalititanat gekennzeichnet durch seine BET-Oberfläche von 5 bis 100 m2/g, seinen Chlorid- und Niob-Gehalt
---

## ANHANG ZUM EUROPÄISCHEN RECHERCHENBERICHT
## ÜBER DIE EUROPÄISCHE PATENTANMELDUNG NR.

EP 04 02 1822

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-01-2005

| Im Recherchenbericht angeführtes Patentdokument | | | Datum der Veröffentlichung | Mitglied(er) der Patentfamilie | | Datum der Veröffentlichung |
|---|---|---|---|---|---|---|
| JP 06316414 | A | | 15-11-1994 | KEINE | | |
| US 2004028601 | A1 | | 12-02-2004 | JP<br>CN | 2003252623 A<br>1428310 A | 10-09-2003<br>09-07-2003 |
| US 2003012727 | A1 | | 16-01-2003 | JP<br>CN | 2003002739 A<br>1392116 A | 08-01-2003<br>22-01-2003 |
| EP 0250085 | A | | 23-12-1987 | US<br>EP<br>JP<br>KR | 4764493 A<br>0250085 A2<br>62297214 A<br>9102386 B1 | 16-08-1988<br>23-12-1987<br>24-12-1987<br>20-04-1991 |
| EP 0618597 | A | | 05-10-1994 | US<br>DE<br>DE<br>EP<br>JP<br>US<br>US<br>US | 5354819 A<br>69404189 D1<br>69404189 T2<br>0618597 A1<br>6326250 A<br>6204069 B1<br>6319542 B1<br>6593638 B1 | 11-10-1994<br>21-08-1997<br>08-01-1998<br>05-10-1994<br>25-11-1994<br>20-03-2001<br>20-11-2001<br>15-07-2003 |
| EP 1415955 | A | | 06-05-2004 | EP<br>JP<br>WO<br>JP<br>US | 1415955 A1<br>3578757 B2<br>03004416 A1<br>2004300027 A<br>2003044347 A1 | 06-05-2004<br>20-10-2004<br>16-01-2003<br>28-10-2004<br>06-03-2003 |

EPO FORM P0461

Für nähere Einzelheiten zu diesem Anhang : siehe Amtsblatt des Europäischen Patentamts, Nr.12/82